(19) 

Europäisches Patentamt

European Patent Office

Office européen des brevets

(11) **EP 4 550 901 A1**

(12) **EUROPEAN PATENT APPLICATION**
published in accordance with Art. 153(4) EPC

(43) Date of publication:
**07.05.2025 Bulletin 2025/19**

(21) Application number: **22948298.9**

(22) Date of filing: **28.06.2022**

(51) International Patent Classification (IPC):
***H04W 68/02*** (2009.01)

(52) Cooperative Patent Classification (CPC):
Y02D 30/70

(86) International application number:
**PCT/CN2022/101989**

(87) International publication number:
**WO 2024/000178 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Quectel Wireless Solutions Co., Ltd.
Shanghai 201601 (CN)**

(72) Inventors:
- ZHAO, Zheng
  **Shanghai 201601 (CN)**
- LV, Ling
  **Shanghai 201601 (CN)**
- YANG, Zhongzhi
  **Shanghai 201601 (CN)**
- QIAN, Penghe
  **Shanghai 201601 (CN)**

(74) Representative: **Fish & Richardson P.C.
Highlight Business Towers
Mies-van-der-Rohe-Straße 8
80807 München (DE)**

(54) **WIRELESS COMMUNICATION METHOD AND APPARATUS**

(57)    The present disclosure provides a method and apparatus for wireless communication, which can save power consumption of a terminal device. The method includes: a terminal device receiving first indication information transmitted by a central node. The first indication information is used to indicate that a network device pages the terminal device.

FIG. 5

## Description

## TECHNICAL FIELD

The present disclosure relates to the field of communication technology, and more specifically to a method and apparatus for wireless communication.

## BACKGROUND

To improve communication performance of a terminal device, the terminal device may access a central node, and the central node may provide a network service for the terminal device. For example, the central node provides a wireless fidelity (WiFi) signal for the terminal device. In a communication system having the central node, how to effectively save power consumption of the terminal device through assistance of the central node is an urgent problem to be solved at present.

## SUMMARY

In view of the above problem, the present disclosure provides a method and apparatus for wireless communication, which can save power consumption of a terminal device.

According to a first aspect, a method for wireless communication is provided, including: receiving, by a terminal device, first indication information transmitted by a central node, where the first indication information is used to indicate that a network device pages the terminal device.

According to a second aspect, a method for wireless communication is provided, including: transmitting, by a central node, first indication information to a terminal device, where the first indication information is used to indicate that a network device pages the terminal device.

According to a third aspect, a method for wireless communication is provided, including: transmitting, by an access network device, second indication information to a central node to enable the central node to transmit first indication information to a terminal device, where the first indication information is used to indicate that a network device pages the terminal device.

According to a fourth aspect, a method for wireless communication is provided, including: transmitting, by a core network, third indication information to a central node to enable the central node to transmit first indication information to a terminal device, where the first indication information is used to indicate that a network device pages the terminal device.

According to a fifth aspect, a method for wireless communication is provided, including: transmitting, by a terminal device, a request message to a central node, wherein the request message is used to request the central node to transmit a preamble of the terminal device to a network device.

According to a sixth aspect, a method for wireless communication is provided, including: receiving, by a central node, a request message transmitted by a terminal device, where the request message is used to request the central node to transmit a preamble of the terminal device to a network device; and transmitting, by the central node, the preamble of the terminal device to the network device in response to the request message.

According to a seventh aspect, an apparatus for wireless communication is provided, and the apparatus is a terminal device and includes: a receiving unit, configured to receive first indication information transmitted by a central node, where the first indication information is used to indicate that a network device pages the terminal device.

According to an eighth aspect, an apparatus for wireless communication is provided, and the apparatus is a central node and includes: a transmitting unit, configured to transmit first indication information to a terminal device, where the first indication information is used to indicate that the network device pages the terminal device.

According to a ninth aspect, an apparatus for wireless communication is provided, and the apparatus is an access network device and includes: a transmitting unit, configured to transmit second indication information to a central node to enable the central node to transmit first indication information to a terminal device, where the first indication information is used to indicate that a network device pages the terminal device.

According to a tenth aspect, an apparatus for wireless communication is provided, and the apparatus is a core network and includes: a transmitting unit, configured to transmit third indication information to a central node to enable the central node to transmit first indication information to a terminal device, where the first indication information is used to indicate that a network device pages the terminal device.

According to an eleventh aspect, an apparatus for wireless communication is provided, and the apparatus is a terminal device and includes: a transmitting unit, configured to transmit a request message to a central node, where the request message is used to request the central node to transmit a preamble of the terminal device to a network device.

According to a twelfth aspect, an apparatus for wireless communication is provided, and the apparatus is a central node and includes: a receiving unit, configured to receive a request message transmitted by a terminal device, where the request message is used to request the central node to transmit a preamble of the terminal device to a network device; and a transmitting unit, configured to transmit the preamble of the terminal device to the network device in response to the request message.

According to a thirteenth aspect, an apparatus for wireless communication is provided, including a processor, a memory, and a communication interface, where the memory is configured to store one or more computer programs, and the processor is configured to invoke the one or more computer programs in the memory to cause the terminal device to perform the method according to any one of the first aspect to the sixth aspect.

According to a fourteenth aspect, an apparatus is provided, including a processor, where the processor is configured to invoke a program from a memory to perform the method according to any one of the first aspect to the sixth aspect.

According to a fifteenth aspect, a chip is provided, including a processor, where the processor is configured to invoke a program from a memory to cause a device installed with the chip to perform the method according to any one of the first aspect to the sixth aspect.

According to a sixteenth aspect, a computer-readable storage medium is provided, where the computer-readable storage medium stores a program, and the program causes a computer to perform the method according to any one of the first aspect to the sixth aspect.

According to a seventeenth aspect, a computer program product is provided, including a program, where the program causes a computer to perform the method according to any one of the first aspect to the sixth aspect.

According to an eighteenth aspect, a computer program is provided, where the computer program causes a computer to perform the method according to any one of the first aspect to the sixth aspect.

In the embodiments of the present disclosure, the central node helps the terminal device perform paging detection or transmit the random access preamble, which saves the power consumption of the terminal device.

**BRIEF DESCRIPTION OF THE DRAWINGS**

FIG. 1 is an exemplary diagram of a system architecture applicable to a communication system in an embodiment of the present disclosure.

FIG. 2 is an exemplary diagram of a CPE communication system.

FIG. 3 is a schematic diagram of a relative location relationship among a CPE, a terminal device, and a base station.

FIG. 4 is an exemplary architecture diagram of a V2X communication system.

FIG. 5 is a schematic flowchart of a method for wireless communication according to an embodiment of the present disclosure.

FIG. 6 is a schematic flowchart of a four-step random access procedure.

FIG. 7 is a schematic flowchart of a two-step random access procedure.

FIG. 8 is another schematic flowchart of a method for wireless communication according to an embodiment of the present disclosure.

FIG. 9 is a schematic structural diagram of a terminal device according to an embodiment of the present disclosure.

FIG. 10 is a schematic structural diagram of a central node according to an embodiment of the present disclosure.

FIG. 11 is a schematic structural diagram of an access network device according to an embodiment of the present disclosure.

FIG. 12 is a schematic structural diagram of a core network according to an embodiment of the present disclosure.

FIG. 13 is another schematic structural diagram of a terminal device according to an embodiment of the present disclosure.

FIG. 14 is another schematic structural diagram of a central node according to an embodiment of the present disclosure.

FIG. 15 is a schematic structural diagram of a communication device according to an embodiment of the present disclosure.

**DETAILED DESCRIPTION OF THE EMBODIMENTS**

The following describes the technical solutions in the present disclosure with reference to the accompanying drawings.

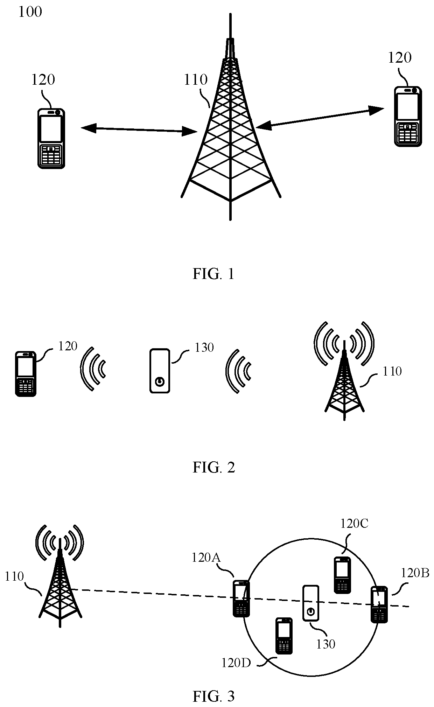

FIG. 1 is a wireless communication system 100 according to an embodiment of the present disclosure. The wireless communication system 100 includes a network device 110 and a terminal 120, and the network device 110 may be a device that communicates with the terminal 120. The network device 110 provides communication coverage for a particular geographic area and communicates with the terminal 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc.,

which is not limited in the embodiments of the present disclosure.

It should be understood that the technical solutions in the embodiments of the present disclosure may be applied to various communication systems, for example, a 5th generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communicatio system, or the like.

The terminal in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal in the embodiments of the present disclosure may be a device that provides voice and/or data connectivity to a user, and may be used to connect a person, an object, and a machine, for example, a handheld device or a vehicle-mounted device having a wireless connection function. The terminal in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal, and the network device may also be referred to as an access network device or a radio access network device, for example, the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multistandard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal may be deployed on land, including indoor or outdoor, handheld or vehicle-mounted, may be deployed on a water surface, and may also be deployed on an aircraft, a balloon, and a satellite in the air. A scenario in which the network device and the terminal are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

In order to improve the communication performance of the terminal device, the terminal device may access a central node, and the central node provides the network service for the terminal device. For example, the central node may provide a WiFi signal for the terminal device. The terminal device may communicate with the network device using WiFi. Certainly, in some embodiments, the central node may also provide a wired network service for the terminal device. The central node in the embodiments of the present disclosure may be a customer premise equipment (CPE), a WiFi base station, a road side unit (RSU) in a sidelink communication system, a central node in a sidelink communication system, and the like.

The WiFi base station in the embodiments of the present disclosure may provide a WiFi signal for the terminal device. The WiFi base station may have the capability of performing uplink synchronization and/or downlink synchronization with the network device. The downlink synchronization capability may include obtaining a cell ID or a physical cell identity (PCI/PCID) of the accessed cell, or obtaining a cell ID or a PCI/PCID of a cell with the maximum receiving power. The uplink synchronization capability may include obtaining the TA transmitted by the base station.

The RSU and/or the central node in the sidelink communication system are responsible for uploading and transmitting management/signaling of the communication network in the cell. The RSU may transmit data such as traffic lights, traffic signs, and obstacles on the road to the vehicle. The central node may refer to a terminal in the vehicle.

The following describes the CPE system in the embodiments of the present disclosure with reference to FIG. 2 and FIG. 3.

CPE SYSTEM

CPE is a mobile signal access device that receives mobile signals from the network side and forwards them as wireless WiFi signals, and the CPE may convert high-speed mobile signals (e.g., 4G, 5G or 6G signals) from the network side into WiFi signals to communicate with the terminal, i.e., the connection between the terminal and the network side is achieved through WiFi signals. CPE can be widely used in rural areas, towns, hospitals, offices, factories, cells, and other wireless network access scenarios, saving the cost of laying wired networks.

The CPE may perform secondary relay on operator network signals. As shown in FIG. 3, the CPE 130 may receive a mobile signal transmitted by the base station 110 and convert the mobile signal into a WiFi signal. For the network device, the CPE is a terminal device, and the CPE may be inserted into a subscriber identity module (SIM) card. Due to the stronger antenna gain and higher power, the CPE has a stronger signal transceiving capability compared to the terminal device. Thus, in some areas where some terminal devices may have no signal, the CPE may still have signals. In addition, the CPE may be used as a mobile relay to ensure that the terminal device has a better connection during movement.

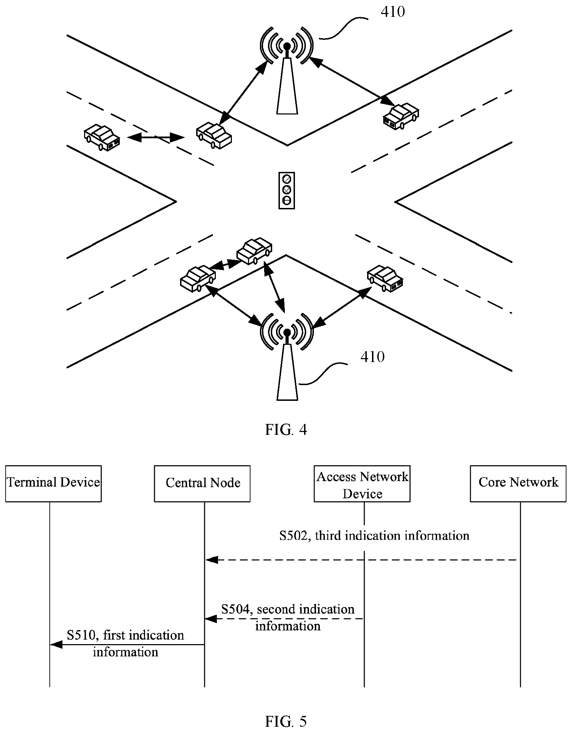

The terminal device in the embodiments of the present disclosure is within both the coverage of the base station and the coverage of the CPE. There may be various relative positional relationships among the CPE 130, the terminal device 120, and the base station 110, which are not specifically limited in the embodiments of the present disclosure. For example, the terminal device may be located on a connection line between the CPE and the base station, such as the terminal device 120A in FIG. 4. For another example, the terminal device may be located on an extension line of the connection line between the CPE and the base station, such as the terminal device 120B in FIG. 4. The terminal device (or the terminal device 120B), the CPE, and the base station are located on a straight line. For another example, the terminal device, the CPE, and the base station form a triangle, such as the terminal device 120C and 120D in FIG. 4.

The terminal device within the coverage of the CPE may access the network based on the WiFi signal transmitted by the CPE, so as to communicate with another device. In the current CPE system, the CPE is a terminal from the perspective of the network device. However, for the terminal device within the coverage of the CPE, the CPE acts as the WiFi base station. From the perspective of wireless communication, both the CPE and the terminal device are terminals, and both independently communicate with the network device, such as performing downlink synchronization, reading broadcast information, uplink random access, paging, etc.

The following describes the V2X system in the embodiments of the present disclosure with reference to FIG. 4.

V2X SYSTEM

In a V2X system, a terminal may communicate with a terminal through a sidelink (SL). Sidelink communication may also be referred to as proximity services (ProSe) communication, one-sided communication, sidelink communication, device-to-device (D2D) communication.

In other words, the terminal and the terminal transmit sidelink data through the sidelink. The sidelink data may include data and/or control signaling. In some implementations, the sidelink data may be, for example, a physical sidelink control channel (PSCCH), a physical sidelink control channel (PSSCH), a PSCCH demodulation reference signal (DMRS), a PSSCH DMRS, a physical sidelink feedback channel (PSFCH), and the like.

The V2X system is one of support technologies for intelligent vehicles and intelligent transportation. The V2X system may include one or more of the following communication application scenarios: vehicle to vehicle (V2V) communication, vehicle to infrastructure (V2I) communication, vehicle to pedestrian (V2P) communication, vehicle to network (V2X) communication, and the like.

Based on V2V communication, vehicles can achieve functions such as forward collision early warning, lane change assistance, left turn assistance, cooperative adaptive cruise control, and the like. Based on V2P communication, application such as speed suggestion, traffic priority, road condition early warning, red light violation early warning, current weather influence early warning, parking spot and charging station location can be realized. Based on V2P communication, services such as early warning and protection for underprivileged road users can be realized. Based on V2P communication, services such as real-time traffic route planning and map updating can be realized.

The V2X system supports a centralized network model, a distributed network model, and a hybrid network model. The centralized network model continues with a conventional communication network model, as shown in FIG. 4. A vehicle node performs communication connection between vehicles through a central node 410 (e.g., a road side unit (RSU) or base station). The RSU may transmit data such as traffic lights, traffic signs, and obstacles on the road to the vehicle. The central node is responsible for uploading and transmitting management/signaling of the communication network in a cell. This has the advantage that the vehicle node can conveniently access the network at any time and can connect to a vehicle node in a very distant place (similar to a principle of mobile phone communication). In addition, due to effective scheduling of the central node, the communication quality is effectively guaranteed.

In the distributed network model, vehicles flexibly form a network in a self-organizing manner. A structure of the distributed network model may be shown in the accompany drawings. Vehicles may join or exit the network at any time in a distributed network structure without affecting overall performance of the network. In terms of communication performance, the distributed network structure can utilize network bandwidth more efficiently.

The hybrid network model may be understood as including an RSU or a base station as a central node of a region to perform unified regulation, while also allowing vehicles to establish D2D connections, which is compatible with advantages of the centralized network model and the distributed network model, thereby reducing the cost of network deployment.

In the centralized network model and the hybrid network model, if the central node is an RSU, the vehicle may establish a connection with the RSU. The RSU and the vehicle may communicate through a wireless signal. The wireless signal may be a WiFi signal, a mobile signal, or the like. If there is a WiFi connection between the vehicle and the RSU, the vehicle may close the mobile data and communicate with the network side through WiFi.

PAGING

For a terminal in a radio resource control (RRC) idle state, a paging message is usually received in a manner similar to a discontinuous reception (DRX) mechanism. There is one paging occasion (PO) within in a DRX cycle. The terminal receives the paging message only during the PO and does not receive the paging message at a time other than the paging occasion to achieve the purpose of power saving. In addition, during the PO, the terminal may determine whether there is a paging message by detecting a physical downlink control channel (PDCCH) scrambled with a paging radio network temporary identifier (P-RNTI).

For the terminal device in the RRC idle state, if the network device wants to transmit a downlink message or downlink data to the terminal device, the network device may enable the terminal device to switch to a RRC connected state by paging. This paging process may be used to transmit a paging request to a terminal in an RRC idle state, or the paging process may be further used to notify the terminal of system information update, or the paging process may be further used to notify the terminal to receive alarm information transmitted by an earthquake and tsunami warning system (ETWS) and a commercial mobile alert system (CMAS).

The paging process may be triggered by a core network or a base station. The core network may be, for example, an access and mobility management function (AMF). If the paging message is initiated by the core network, the core network may transmit the paging message to all base stations in a tracking area (TA) registered by the terminal. After receiving the paging message transmitted by the core network, the base station may interpret the content therein to obtain a tracking area identity (TAI) list of the paged terminal and page over the air in the cell belonging to the tracking area in the list. To save the overhead of transmitting the paging message, the base station generally aggregates paging messages corresponding to terminals of the same PO into one paging message after receiving the paging messages transmitted by the core network, and finally transmits the paging message to the related terminals through the paging channel. After receiving the paging message, the terminal in the RRC idle state may initiate an RRC connection establishment procedure to receive data or signaling.

The paging message is carried on a physical downlink shared channel (PDSCH). Before receiving the paging message, terminals need to first receive paging parameters through system messages and calculate a frame number and PO of a paging frame (PF) where the paging message is located combination with their respective UE_ID, then monitor the PDCCH scrambled with the P-RNTI in the PO on the PF to receive paging indication information, and finally receive the paging message based on the paging indication information. It should be understood that the paging indication information is carried on the PDCCH, and the paging message may be used to indicate a resource location of the PDSCH carrying the paging message.

For example, the terminal may detect a PDCCH in the PO to obtain downlink control information (DCI), and a cyclic redundancy check (CRC) of the DCI is scrambled by the P-RNTI. If the terminal device detects the DCI, the terminal device may receive the PDSCH at a resource location (such as a time domain resource location and/or a frequency domain resource location) indicated by the DCI. The terminal device may decode the PDSCH using a temporary mobile subscriber identity (TMSI) (e.g., a 5G-S-TMSI). If the decoding succeeds, it indicates that the terminal device is paged, and the terminal obtains the paging message from the PDSCH. If the decoding fails, it indicates that the terminal device is not paged.

In addition, in some communication systems (e.g., an NR system), for a terminal in an RRC idle state, the network device does not know which transmit beam to use for transmitting a paging message to the terminal. To ensure that the terminal can receive the paging message, the network device transmits the paging message using beam scanning. To support multi-beam transmission of the paging message, the PO may be defined as a group of PDCCH monitoring occasions, and different PDCCH monitoring occasions correspond to paging indication information transmitted through different transmit beams. A PF may include one or more POs or starting time point(s) of one or more POs.

Since each synchronization signal block (SSB) index corresponds to one PDCCH monitoring occasion and different SSB indexes correspond to different beams, a plurality of PDCCH monitoring occasions in one PO may be associated with transmit beams corresponding to different SSB indexes to support multi-beam transmission of the paging message. The messages transmitted on each SSB beam are completely the same. Generally, SSBs required for completing one beam scanning constitutes an "SSB burst". The PDCCH monitoring occasions are a series of time domain locations determined by a paging search space.

It is known from the foregoing description that the terminal may perform paging detection in a manner similar to the DRX mechanism. In each paging cycle, the terminal may periodically monitor the PDCCH in the PO to obtain the paging indication information. However, for some terminals, they may not be paged for a long period of time, but still need to remain periodically awakened to monitor PDCCHs that may carry the paging indication information. For the power-saving mode of this type of terminal, there is a further improved space.

In order to further improve the power-saving mode of the terminal, a solution for further saving power of the terminal based on paging early indication (PEI) is discussed. In this solution, the network device transmits the PEI to the terminal, which may be transmitted before the PO in each paging cycle arrives, or may be transmitted once every multiple paging cycles, or may be transmitted multiple times in one paging cycle. The PEI may be used to indicate whether the terminal receives the PDCCH carrying the paging indication information, or the PEI may be used to indicate whether the terminal receives the paging indication information, or the PEI may be used to indicate whether the terminal is woke up. The terminal may only be woke up when the PEI indicates that the terminal needs to receive the paging indication information. Otherwise, if the PEI indicates that the terminal does not need to receive the paging indication information, the terminal maintains a sleep state to save energy.

When there is a connection link between the terminal device and the central node, the terminal device usually turns off a communication module (hereinafter referred to as a mobile communication module) that communicates with the base station (or the access network device). The mobile communication module may be, for example, an LTE module or an NR module. For example, when a mobile signal and a WiFi signal in the terminal device coexist, the terminal device turns off a data service of the mobile signal, i.e., the terminal device may disconnect the connection with the base station. The data of the terminal device goes through the core network and the WiFi to reach the terminal device. When there is a Wi-Fi connection, the mobile communication module in the terminal device only needs to support a voice service.

When there is a connection link between the terminal device and the central node, the network device may transmit a paging message to the terminal device if a message arrives at the terminal device. The paging message may be triggered by one or more of the following events, i.e., the system message changes, there is an early warning signal, and the voice service of the terminal device arrives.

Taking paging for the voice service as an example, the terminal device needs to perform paging detection at a certain interval to support the voice service. Taking the LTE communication protocol as an example, the maximum paging cycle is 2.56s, i.e., the terminal device needs to wake up every 2.56s to perform paging detection. Before paging detection, the terminal device may have an uplink/downlink out-of-sync condition, in which case the terminal device further needs to perform uplink and downlink synchronization. When performing uplink and downlink synchronization, the terminal device consumes a relatively large power.

In addition, in recent years, with the popularization of communication applications (APP) such as WeChat, Teams, Skype, etc., communication cost thereof is much lower than that of operator voice services, so that the use frequency of operator voice services is greatly reduced. Although there are few voice services, the terminal device still needs to wake up periodically as described above to perform paging detection. When the WiFi module and the mobile communication module of the terminal are turned on at the same time, the mobile communication module of the terminal device needs to wake up for paging detection at least every 2.56s in order to support the voice service with extremely low frequency, which brings unnecessary power consumption to the terminal device.

In order to solve the foregoing problem, in the embodiments of the present disclosure, the paging message of the terminal device may be detected by the central node, and the terminal device is notified only when it is detected that the terminal device is paged, so that frequent wake-up of the terminal device may be avoided to perform paging detection, which is conducive to saving power consumption of the terminal device. Since the central node itself is also a terminal device, the central node may use its capability of connecting to the network device to assist the terminal device in performing paging detection, thereby achieving the purpose of saving power.

The following describes the solutions in the embodiments of the present disclosure with reference to FIG. 5.

Referring to FIG. 5, at operation S510, the central node transmits first indication information to the terminal device. The first indication information is used to indicate that the network device pages the terminal device.

In the embodiments of the present disclosure, the terminal device may be a terminal device in an RRC_IDLE state, or the terminal device may be a terminal device that does not perform network access, or there is no RRC connection between the terminal device and the access network device.

In the present disclosure, the communication signal between the central node and the terminal device is a non-mobile signal. The mobile signal may refer to a network signal provided by an operator, and the non-mobile signal may refer to a network signal provided by a non-operator. The mobile signal may be, for example, an LTE signal, an NR signal, or a 6G signal. The non-mobile signal may be, for example, a WiFi signal or a wired network signal. The central node and the terminal device may have WiFi connection, or the central node and the terminal device may have wired connection. The central node may provide a WiFi or wired network service for the terminal device. The central node may be one or more of the CPE, the WiFi base station, the road side unit in the sidelink communication system, and the central node in the sidelink communication system described above.

The WiFi base station in the embodiment of the present disclosure may provide a WiFi signal for the terminal device. The WiFi base station may have the capability of performing uplink synchronization and/or downlink synchronization with the network device. The downlink synchronization capability may include obtaining a cell ID or a PCI/PCID of the accessed cell, or obtaining a cell ID or a PCI/PCID of a cell with the maximum receiving power, or obtaining cell IDs or PCI/PCIDs of several cells with the optimal receiving power. The uplink synchronization capability may include obtaining the TA transmitted by the base station.

When detecting that the terminal device is paged by the network device, the central node may transmit the first indication information to the terminal device to indicate that the terminal device is paged by the network device. The network device in the embodiments of the present disclosure may be an access network device, or may be a core network. In other words, the paging of the terminal device may be triggered by the access network device, or may be triggered by the core network. The access network device in the embodiments of the present disclosure may be a base station.

The central node may detect a message from the access network device to determine whether the terminal device is paged. Alternatively, the central node may detect a message from the core network to determine whether the terminal device is paged. Alternatively, the central node may forward a paging message or voice communication data from the core network to the terminal device. In some embodiments, the transmitting of the first indication information may be triggered by one or both of the following events, i.e., the central node receives second indication information transmitted by the access network device, where the second indication information is used to indicate that the network device pages the terminal device; and the central node receives third indication information transmitted by the core network, where the third indication information is used to indicate that the network device pages the terminal device.

In some embodiments, to ensure that the core network or the access network device may transmit a paging indication of the terminal device to an appropriate CPE, the core network or the access network device may obtain information about terminal devices in the coverage of the CPE. The information about the terminal devices in the coverage of the CPE may be reported by the CPE to the network device or may be reported by the terminal device to the access network device. For example, the CPE may report ID information of all the terminal devices in the coverage of the CPE to the access network device. For another example, the terminal device may report information of the CPE in which the terminal device is located to the access network device.

In some embodiments, as shown in FIG. 5, the method shown in FIG. 5 may further include operation S504. At operation S504, the access network device transmits second indication information to the central node to enable the central node to transmit the first indication information to the terminal device. After receiving the second indication information, the central node may determine that the terminal device is paged. Further, in response to the second indication information, the central node transmits the first indication information to the terminal device.

In some embodiments, the second indication information may be carried by a PEI of the terminal device, and the PEI indicates that the terminal device needs to receive paging indication information (or a paging message). The central node may receive the PEI for the terminal device transmitted by the access network device. If the PEI indicates that the terminal device needs to receive the paging indication information, the central node may transmit the first indication information to the terminal device. If the PEI indicates that the terminal device does not need to receive the paging indication information, the central node may not transmit the first indication information to the terminal device.

In some embodiments, PEIs of all the terminal devices under the coverage of the central node are carried in the same control information. A sequence number of the PEI of the terminal device in all bits of the PEI corresponding to the central node may be determined based on first information. The first information may include one or more of: a sequence number of the terminal device among all the terminal devices under the coverage of the central node, a number of bits of the PEI corresponding to the central node, and a bit sequence number of a PEI of a first terminal device in the bits of the PEI corresponding to the central node.

In some embodiments, the number of bits of the PEI corresponding to the central node is small, which is insufficient to allocate a dedicated PEI to each terminal device. In this case, a plurality of terminal devices may share one PEI, i.e., the one PEI may be used to indicate whether the plurality of terminal devices receive the paging indication information. The PEI corresponding to the central node may be understood as the PEI occupied by all the terminal devices under coverage of the central node, or may be understood as the PEI occupied by the central node and all the terminal devices under coverage of the central node.

The first terminal device may be regarded as the terminal device whose sequence number ranks first among all the terminal devices under coverage of the central node. A bit sequence number of the PEI of the first terminal device in the bits of the PEI corresponding to the central node may also be referred to as a start bit sequence number. Assuming that the bits of the PEI corresponding to the central node range from bit 0 to bit 20, the start bit sequence number may be any one of 0 to 20. In other words, the central node or the network device may configure the PEI bits for the terminal device starting from the bit 0, or may configure the PEI bits for the terminal device starting from another bit position.

When the PEI bit is configured for the terminal device, the central node or the network device may configure the PEI bit for the terminal device according to an identifier (or sequence number) order of the terminal device. For example, the central node may sort the identifiers of the terminal devices in a descending order or an ascending order, and sequentially allocate PEI bits to the terminal devices.

In some embodiments, a sequence number $i_{PEI}$ of the PEI of the terminal device in all bits of the PEI corresponding to the central node is determined according to the following equation:

$$i_{\mathrm{PEI}} = mod(n_{intraUEID}, N) + i_{begin}$$

where N is a number of bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

The value of N may be notified by the base station to the central node. The value of $i_{begin}$ may be notified by the base station to the central node or may be calculated by the central node according to a UE ID of the central node based on an existing protocol. The central node may notify the value of $n_{intraUEID}$ to the base station.

Certainly, in some embodiments, PEI of each terminal may also be indicated in an existing standard manner. The central node detects the PEI of each terminal, and if the corresponding PEI is detected, the central node notifies the terminal to wake up to detect the paging message or receive the communication data.

When configuring the PEI of the terminal device, the access network device may notify the central node of the PEI corresponding to each terminal device. Taking the CPE system as an example, the access network device may notify the CPE of PEIs corresponding to all terminal devices in a coverage of the CPE. In some embodiments, the PEI may indicate whether a terminal device needs to receive paging indication information, or the PEI may indicate whether a group of terminal devices need to receive paging indication information. That is, one PEI may correspond to one terminal device or a group of terminal devices.

In order to reduce detection complexity of the PEI, the PEI of the terminal device may be carried in the same one piece of control information with PEIs of other devices. The control information may be a PDCCH or DCI. For example, the PEI of the terminal device is carried in the first control information, and the first control information may further include one or more of the PEI of the central node and PEIs of other terminal devices. Other terminal devices may be devices connected to the central node, or other terminal devices may be other terminal devices within the coverage of the central node. In this way, the central node can detect the PEIs of the central node and other devices by receiving one piece of control information, thereby reducing the complexity of PEI detection. The PDCCH or DCI is the signaling of the physical layer and indicates whether the terminal is paged through physical layer signaling, which has a relatively low delay.

In some embodiments, the second indication information is carried in a paging message of the central node. The central node may detect on its own paging occasion to determine whether the terminal device is paged.

The second indication information may be carried in a paging PDSCH of the central node. The paging PDSCH may refer to a PDSCH scheduled by a PDCCH on the paging occasion of the central node, and the PDSCH is used to carry a paging message of the central node. For example, the central node may receive a PDCCH on the paging occasion of the central node and receive the paging message on the PDSCH scheduled by the PDCCH. The PDSCH includes indication information about whether the terminal device is paged. If the PDSCH includes the indication information that the terminal device is paged, i.e., includes the second indication information, the central node transmits the first indication information to the terminal device. If the PDSCH does not include the indication information that the terminal device is paged, the central node does not transmit the first indication information to the terminal device.

In some embodiments, the second indication information is indicated by an identifier of the terminal device. For example, if the paging message of the central node includes the identifier of the terminal device, it indicates that the terminal device is paged. If the paging message of the central node does not include the identifier of the terminal device, it indicates that the terminal device is not paged.

The identifier of the terminal device may be an ID of the terminal device, or the identifier of the terminal device may be a sequence number of the terminal device among the terminal devices under the coverage of the central node. Compared with terminal devices under the coverage of the base station, the number of the terminal devices under the coverage of the central node is relatively small, and therefore, the sequence number of the terminal device among the terminal devices under the coverage of the central node is used as identifier information, so that signaling load is saved.

The identifier information of the terminal device may be reported by the central node to the base station, or the identifier information of the terminal device may be determined by the base station itself. For example, the central node may number the terminal devices in the coverage of the central node and report the number information of the terminal devices to the base station. For another example, the base station and the central node may sort the IDs of the terminal devices based on the same sorting manner, to determine the numbers of the terminal devices. The sorting manner may be negotiated by the base station and the central node, or notified by the base station to the central node, or notified by the central node to the base station.

In some embodiments, the second indication information may be obtained via paging detection by the central node based on paging configuration information of the terminal device. For example, the central node may perform the detection on the paging occasion of the terminal device based on the paging configuration information of the terminal device, to determine whether the terminal device is paged. If it is detected that the terminal device is paged, the central node transmits the first indication information to the terminal device. If the terminal device is not detected to be paged, the central node may not transmit the first indication information to the terminal device.

The paging occasion of the terminal device may be determined by the paging configuration parameter of the terminal device. The paging configuration parameter may be transmitted by the base station to the central node or may be transmitted by the terminal device to the central node. The paging configuration parameter may include one or more of: a search space of the PDCCH, a paging cycle, a paging occasion, and an ID of the terminal device. The central node may determine the paging occasion of the terminal device based on the paging configuration parameter of the terminal device.

The solution does not change the base station side, and the base station may page the terminal device in an original manner of transmitting the paging message.

In some embodiments, as shown in FIG. 5, the method shown in FIG. 5 may further include operation S502. At operation S502, the core network may transmit third indication information to the central node to indicate that the terminal device is paged. The core network transmits the indication information to the central node, so that the modification to the network side is reduced, and the implementation complexity is relatively low.

To enable a message transmitted by the core network to arrive at the terminal device, the third indication information may further include one or more of: an internet protocol (IP) address of the terminal device, an IP address of the central node, an identifier of the terminal device, and an identifier of the central node. The IP address of the central node or the identifier of the central node may be used to transmit the second indication information to the central node. The IP address of the terminal device or the identifier of the terminal device may be used for the central node to transmit the first indication information to the terminal device.

Taking paging for a voice call as an example, the maintenance of the IP address may be a called operator, a calling operator, or a third-party mechanism.

A manner in which the central node transmits the first indication information to the terminal device is not specifically limited in the embodiments of the present disclosure. For example, the central node may transmit the first indication information using a WiFi signal and/or a WiFi sequence. The WiFi sequence may be, for example, a WiFi beacon. The WiFi signal may be a WiFi pilot signal.

In some embodiments, the first indication information may be received by a wakeup device in the terminal device. The central node may transmit the first indication information to the wakeup device in the terminal device. After receiving the first indication information, the wakeup device may wake up the terminal device. Receiving the first indication information using hardware has a relatively low transmission delay, so that a transmission delay of the data is ensured. In addition, the power consumption of the wakeup device is extremely low (which is a nano-watt level) and receiving sensitivity of the wakeup device may reach tens of meters, so that the wakeup device is used to receive the first indication information without greatly affecting the power consumption of the terminal device.

The larger the power consumption of the wakeup device, the higher the receiving sensitivity, and the farther the supported distance for transmitting and receiving. According to different coverages of the central node, power consumption of the wakeup device may also be different. Since the base station is far away from the terminal device, if the wakeup device detects the paging indication information transmitted by the base station, the power consumption required is relatively large. Since the central node is closer to the terminal device, the terminal device may use the wakeup device with lower power consumption to receive the first indication information transmitted by the central node.

The wakeup device in the terminal device may periodically detect a signal transmitted by the central node.

The first indication information transmitted by the central node may be transmitted in a sequence form. When there are a plurality of terminal devices in the coverage of the central node, the central node may configure a sequence for each terminal device in advance. When a terminal device is paged, the central node may transmit a sequence corresponding to the terminal device to the terminal device. The wakeup device of the terminal device may match the received sequence, and if the matching succeeds (e.g., the matched value is greater than a preset threshold), it is considered that the terminal device is paged. If the matching fails, it is considered that the terminal device is not paged.

Specifically, a control module of the wakeup device in the terminal device may receive a sequence code allocated by the central node to the terminal device. The terminal device configures the sequence code for the control module. The terminal device may use the sequence code to perform detection. For example, the terminal device may perform matching calculation on the received sequence code and a local sequence code using a matching correlation algorithm, to determine a detection result. The terminal device determines, based on the detection result, whether the terminal device is paged. For example, if the detection result is greater than the preset threshold, the terminal device may determine that the terminal device is paged. If the detection result is less than or equal to the preset threshold, the terminal device may determine that the terminal device is not paged.

After receiving the first indication information, the terminal device may receive the paging message. A manner of receiving the paging message is not specifically limited in the embodiments of the present disclosure. For example, the terminal device may receive the paging message via the central node. For another example, the terminal device may receive the paging message via the access network device.

If the terminal device receives the paging message via the access network device, the terminal device is woken up after receiving the first indication information, and the terminal device may wake up to receive or detect the paging message. Since the terminal device wakes up to receive the paging message only after it is determined that the terminal device is paged, instead of periodically waking up for paging detection, the power consumption of the terminal device can be saved. In some embodiments, the terminal device may turn on the mobile communication module to establish a connection with the access network device, so as to receive the paging message transmitted by the access network device. Receiving the paging message via the access network device ensures data security. For example, the terminal device may detect the PDCCH on its own paging occasion, and then detect the paging message on the PDSCH scheduled by the PDCCH, thereby completing the reception of the paging message. Before receiving the paging message, the terminal device needs to first establish a connection with the access network device. For example, the terminal device may complete uplink and downlink synchronization, random access, signal measurement, etc. with the access network device.

If the first indication information is received by the wakeup device, the wakeup device may wake up the mobile communication module of the terminal device after receiving the first indication information, i.e., turn on the mobile communication module of the terminal device. The wakeup device and the mobile communication module may be electrically connected to each other. For example, after receiving the first indication information, the wakeup device may output a high level to trigger the mobile communication module to be turned on.

If the terminal device receives the paging message via the central node, the terminal device may keep the mobile communication module in a turn-off state and receive the paging message through a WiFi signal between the terminal device and the central node. Receiving the paging message via the central node saves the communication cost of the terminal device and reduce the communication cost.

In some embodiments, the network device (e.g., the access network device or the core network) may transmit the paging message to the central node, and then the central node transmits the paging message to the terminal device. In some embodiments, the central node may transmit the paging message to the terminal device in a transparent mode. In this case, the central node may not perform any processing on the paging message, so that the security of the data of the terminal device is ensured. Certainly, in some embodiments, the central node may perform format conversion on the paging message and convert the paging message into data that can be identified by the terminal device, e.g., be converted into an APP data packet.

If the paging message is transmitted via the core network (i.e., the core network transmits the paging message directly to the central node without going through the access network device), in order to ensure that the terminal device correctly receives the paging message, the core network or the central node may convert the paging message into a data packet that can be identified by the terminal device, e.g., the paging message may be converted into the APP data packet. The data format conversion performed by the core network ensures the security of data transmission, and the central node only needs to transmit the data packet transmitted by the core network to the terminal device in the transparent mode.

The APP may be an APP dedicated to receiving the paging message, or the APP may multiplex an existing APP to receive the paging message. Reusing the existing APP may further save power consumption of the terminal device. In addition, receiving the paging message using the APP data packet may also avoid blind detection of the terminal device on the paging occasion, thereby reducing the power consumption of the detection of the terminal device.

In the embodiments of the present disclosure, a paging cycle of the central node may be less than a paging cycle of the terminal device, so that the central node may obtain information about whether the terminal device is paged earlier, thereby avoiding increasing a paging delay of the terminal device. Since the central node (e.g., a CPE) is large in size, usually works in an active state or has a large battery capacity, the CPE can support a relatively low paging cycle. Adopting the solutions of the embodiments of the present disclosure overcomes a defect of a long paging cycle of an existing terminal device and provides a smaller paging cycle for the terminal device.

Taking a voice service as an example, some communication systems (such as LTE systems) have an end-to-end delay requirement for the voice service of 3s, with a paging delay requirement of 1s. Considering time such as paging detection and ACK/NACK feedback, the paging cycle of the terminal device should be less than 1s. Therefore, the paging cycle of the central node in the embodiments of the present disclosure should be less than 1s.

In addition, when the central node receives the paging indication for the plurality of terminal devices, starting and ending times of the paging cycles of the terminal devices may not overlap, and therefore, the central node may need to configure a smaller paging cycle, so as to detect the paging indication of all the terminal devices.

The network device (the access network device or the core network) or the terminal device in the embodiments of the present disclosure may determine whether to implement the solutions of the embodiments of the present disclosure based on whether there is a connection between the terminal device and the central node. The terminal device may report the indication information indicating whether to connect to the central node to the access network device or the core network. For example, if the terminal device is connected to the central node, the terminal device may transmit fourth indication information to the access network device or the core network. The fourth indication information is used to indicate that the terminal device is connected to the access network device. When the fourth indication information transmitted by the terminal device is received, the access network device may transmit the second indication information to the central node. When the fourth indication information transmitted by the terminal device is received, the core network may transmit the third indication information to the central node.

If there is no connection between the terminal device and the central node, the paging information may be transmitted in a conventional manner. For example, the access network device transmits the paging indication information to the terminal device, and the terminal device periodically wakes up to perform paging detection.

In some embodiments, whether there is a connection between the terminal device and the central node may be indicated by the terminal device having a Wi-Fi connection. For example, if the terminal device has the WiFi connection, it indicates that the terminal device is connected to the central node. The terminal device may report information about whether the terminal device has the Wi-Fi connection to the network device, enabling the network device to determine whether to use the solution in the embodiments of the present disclosure.

In some embodiments, the network device may determine, based on a service type of the terminal device, whether the terminal device turns on the mobile communication module, and further, the network device may determine whether to use the solution of the embodiments of the present disclosure based on whether the terminal device turns on the mobile communication module. If the terminal device turns on the mobile communication module, the solutions of the embodiments of the present disclosure may not be implemented. If the terminal device does not turn on the mobile communication module, the solutions of the embodiments of the present disclosure may be implemented, or the solutions of the embodiments of the present disclosure may not be implemented.

For example, if the terminal device has a data service, the terminal device turns on the mobile communication module, and the network device may not implement the solutions of the embodiments of the present disclosure.

For another example, if the terminal device has only a voice service and no data service, the terminal device may turn on the mobile communication module or may not turn on the mobile communication module. In this case, the network device may determine, based on status information reported by the terminal device, whether to adopt the solutions of the embodiments of the present disclosure. For example, the network device may determine, based on whether the terminal device has the WiFi connection, whether to adopt the solution of the embodiments of the present disclosure.

In addition, considering the security problem, if the terminal device is connected to a public WiFi, the solution in the embodiments of the present disclosure may not be implemented, and the terminal device still performs paging detection in a traditional manner.

The solutions described above may be implemented separately or in combination with each other, which is not specifically limited in the embodiments of the present disclosure. For example, both the access network device and the core network may transmit the paging indication to the central node, that is, the access network device may transmit the second indication information to the central node, and the core network may also transmit the third indication information to the central node. By transmitting the paging indication in two manners, the reliability of message transmission is ensured.

The solution in which the core network transmits data to the terminal device via the central node may not depend on a paging scenario, and may be applied to any scenario, such as a voice call scenario. That is, the data transmitted by the core network may be paging data or other data. To simplify the description, reference may be made to the foregoing descriptions for the solutions not described in detail below.

In some embodiments, the core network may transmit first data to the central node. After receiving the first data, the central node may transmit the first data to the terminal device. Optionally, the central node may transmit the first data to the terminal device in a transparent mode. The first data may be paging data, or may be other data, such as voice service data. In the embodiments of the present disclosure, the core network may encapsulate data for the terminal device into a data packet, e.g., APP data, and then transmit the data packet to the terminal device via the central node.

The terminal device in the embodiments of the present disclosure may be in an RRC_IDLE state, an RRC_CONNECTED state, or an RRC_INACTIVE state. In other words, regardless of the state of the terminal device, the core network may directly transmit data to the terminal device via the central node.

The foregoing describes the paging process of the terminal device, and the following describes a random access procedure of the terminal device. The event that triggers the terminal device to perform random access includes one or more of: initial RRC connection, RRC connection reestablishment, cell handover, downlink data arrival (such as PDCCH arrival), uplink data arrival, uplink data arrival when no physical uplink control channel (PUCCH) resource of a scheduling request (SR) is available, scheduling request failure, the terminal device entering the RRC_CONNECTED state from the RRC_INACTIVE state, a specific system information request, activating an NR cell for a non-standalone (NSA) network; beam recovery, etc.

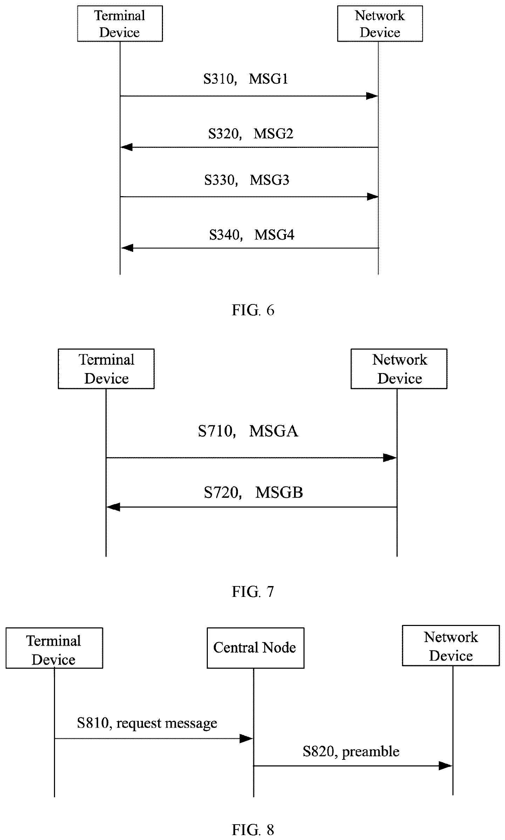

There are two types of random access methods, one is contention-based random access, and the other is non-contention-based random access. The following describes these two random access methods with reference to FIG. 6 and FIG. 7.

FIG. 6 is a flowchart of a non-contention-based random access method according to an embodiment of the present disclosure.

At operation S610, the terminal device transmits a message 1 (Msg1) in a random access procedure to the network device. The Msg1 includes a preamble.

The terminal device may select a random access channel (RACH) resource and the preamble and transmit the selected preamble on the selected resource. The RACH resource may also be referred to as a physical random access channel (PRACH) resource.

The network device may transmit configuration information of the RACH to the terminal device through broadcasting. The configuration information of the RACH may include configuration information of a time-frequency resource of the RACH and configuration information of a start preamble root sequence.

The network device may configure a shared preamble pool for terminal devices. Preambles in the preamble pool are shared by a plurality of terminal devices. The terminal device may select the preamble based on a certain policy. Since the preambles are shared by the plurality of terminal devices, there may be a conflict where the plurality of terminal devices select the same preamble. To resolve this conflict, the network device may use subsequent resolution mechanisms to handle such conflict.

At operation S620, the network device transmits a Msg2 to the terminal device, and the Msg2 may also be referred to as a random access response (RAR). The Msg2 may be carried by the PDCCH.

After transmitting the Msg1, the terminal device may start a random access response time window and monitor a PDCCH scrambled by a random access-radio network temporary identifier (RA-RNTI) in the time window. The RA-RNTI is related to a time-frequency resource of the RACH used by the terminal device to transmit the Msg1. After receiving the PDCCH, the terminal device may decode the PDCCH using the RA-RNTI.

The Msg2 may further include a preamble transmitted by the terminal device, and the terminal device may consider that the random access response is successfully received if the terminal device receives the PDCCH scrambled by the RA-RNTI and the Msg2 includes the preamble transmitted by the terminal device.

After successfully receiving the PDCCH, the terminal device may obtain a physical downlink shared channel (PDSCH) scheduled by the PDCCH. The PDSCH includes the RAR. The RAR may include a plurality of pieces of information. For example, a subheader of the RAR may include a backoff indicator (BI), and the BI may be used to indicate a backoff time for retransmitting Msg1; a random access preamble identification (RAPID) in the RAR indicates that the network device responds to the received preamble index; a payload in the RAR may include a timing advance group (TAG), and the TAG may be used to adjust an uplink timing; the RAR may further include an uplink grant (UL grant) for scheduling an uplink resource indication of the Msg3; and the RAR may further include a temporary cell-radio network temporary identifier (C-RNTI), and for the initially accessed terminal device, it may decode the PDCCH of the Msg4 using the temporary C-RNTI.

If the terminal device does not receive the RAR in the random access response time window or the verification of the RAR fails, it indicates that the response fails. In this case, if the number of attempts of the random access of the terminal device is less than an upper limit value (such as 10 times), the terminal device may continue to attempt to perform random access. If the number of attempts is greater than the upper limit value, it indicates that the random access fails.

At operation S630, the terminal device transmits a Msg3 to the network device. The terminal device may transmit the Msg3 on the uplink grant scheduled by the network device. The Msg3 may also be referred to as a radio resource control (RRC) connection establishment request message.

The Msg3 is primarily used to notify the network device of what event triggered the random access process. The Msg 3 includes the C-RNTI of the terminal device. In different scenarios, the Msg3 transmitted by the terminal device may be different. Below are some examples illustrating a few scenarios.

For example, in a scenario of the RRC connection establishment, the terminal device may transmit an RRC connection establishment request message through the Msg3, and the RRC connection establishment request message may carry a non-access stratum (NAS) UE_ID. The RRC connection establishment request message may be transmitted through a common control channel (CCCH) in a radio link control (RLC) layer. The message is not segmented.

For another example, for an RRC connection reestablishment request, the terminal device may transmit an RRC reestablishment request message through the Msg3. The RRC reestablishment request message does not carry a NAS message and may be transmitted through the CCCH of the RLC layer using the TM. The message is not segmented.

For another example, in a scenario of cell handover, if the terminal device accesses a target cell and there is no dedicated preamble in the handover process, contention-based random access may be triggered. The terminal device may transmit an RRC handover acknowledgement message and the C-RNTI through the Msg 3. The RRC handover acknowledgement message and the C-RNTI may be transmitted via a dedicated control channel (DCCH). In some embodiments, the Msg 3 may further carry a buffer status report (BSR).

At operation S640, the network device transmits a Msg4 to the terminal device.

The Msg4 has two functions, one is for contention conflict resolution, and the other is transmitting an RRC configuration message to the terminal device. If the terminal device carries the C-RNTI in the Msg3, Msg4 uses the PDCCH scrambled by the C-RNTI for scheduling, and accordingly, the terminal device may decode the PDCCH by using the C-RNTI in the Msg3 to obtain the Msg4. If the terminal device does not carry the C-RNTI in the Msg3, such as during initial access, the Msg4 may use the PDCCH scrambled by a temporary C-RNTI for scheduling, and accordingly, the terminal device may decode the PDCCH by using the temporary C-RNTI in the Msg2 to obtain the Msg4. After decoding the PDCCH successfully, the terminal device obtains the PDSCH carrying the Msg4. The terminal device may compare a common control channel (CCCH) service data unit (SDU) in the PDSCH with a CCCH SDU in the Msg3, and it indicates that contention resolution succeeds if they are the same.

FIG. 7 is a flowchart of a non-contention-based random access method according to an embodiment of the present disclosure. The method includes operations S710 to S730.

At operation S710, the network device transmits preamble configuration information to the terminal device. The configuration information includes a preamble and a RACH resource that are required in the random access procedure. The preamble is a dedicated preamble allocated by the network device to the terminal device. The dedicated preamble may be notified to the terminal device via RRC signaling or physical layer (PHY) signaling (e.g., DCI in the PDCCH). The use of the dedicated preamble does not suffer from conflicts with other terminal devices.

At operation S720, the terminal device transmits a MsgA to the network device based on the preamble configuration information, i.e., the terminal device may transmit the preamble to the network device on the RACH resource.

At operation S730, the network device transmits a MsgB to the terminal device. The MsgB may include an RAR. After the terminal device receives the RAR, it indicates that the random access procedure ends.

As described above, in order to improve the communication performance of the terminal device, the terminal device may access the central node, and the central node provides a service for the terminal device. For a scenario in which the terminal device is connected to the central node, how to save power consumption of the terminal device in the random access process is an urgent problem to be solved.

Based on this, the embodiments of the present disclosure provide a method for wireless communication in which the central node replaces the terminal device to transmit the preamble, thereby saving the power consumption of the terminal device in transmitting the preamble and the power consumption of the terminal device in the random access procedure. Since the central node itself is also a terminal device, the central node may assist the terminal device in performing random access by utilizing its capability of connecting to the network device, thereby achieving power saving.

The following describes a method for wireless communication according to an embodiment of the present disclosure with reference to FIG. 8. The method shown in FIG. 8 includes operations S810 to S820.

At operation S810, the terminal device transmits a request message to the central node. The request message is used to request the central node to transmit a preamble of the terminal device to the network device. The preamble may be a preamble of a contention-based random access procedure or may be a preamble of a non-contention-based random access procedure.

The central node in the embodiments of the present disclosure may be one or more of: a CPE, a WiFi base station, a road side unit in a sidelink communication system, and a central node in a sidelink communication system.

The WiFi base station in the embodiments of the present disclosure may provide a WiFi signal for the terminal device. The WiFi base station may have a capability of performing uplink synchronization and/or downlink synchronization with the network device. The downlink synchronization capability may include obtaining a cell ID or a PCI PCID of the accessed cell, or obtaining a cell ID or a PCI PCID of a cell with the maximum receiving power, or obtaining cell IDs or PCI PCIDs of several cells with the optimal receiving power. The uplink synchronization capability may include obtaining the TA transmitted by the base station.

A manner in which the terminal device transmits the request message to the central node is not specifically limited in the embodiments of the present disclosure. For example, the terminal device may transmit a request message to the central node through a WiFi signal and/or a WiFi sequence. The WiFi sequence may be, for example, a WiFi beacon. The WiFi signal may be a WiFi pilot signal.

At operation S820, in response to the request message, the central node transmits the preamble of the terminal device to the network device.

Since the distance between the terminal device and the central node is relatively close, the power consumption required by the terminal device to transmit the message to the central node is less than the power consumption required by the terminal device to transmit the message to the network device. Therefore, the central node replaces the terminal device to transmit the preamble, which can save the power consumption of the terminal device.

In some embodiments, the request message may include one or both of a format of the preamble and a sequence of the preamble. For contention-based random access, the network device may broadcast a preamble pool to the terminal device. The central node serves as a terminal device, which may also receive a preamble pool configured by a network device. Therefore, the terminal device needs to indicate to the central node the format of the preamble and/or the sequence of the preamble required to be transmitted, and the central node may select an appropriate preamble from the preamble pool for transmission based on the format of the preamble and/or the sequence of the preamble.

Certainly, in some embodiments, the terminal device may also directly transmit the preamble to the central node, and the central node transmits the preamble to the network device. In this process, the central node may transmit the preamble to the network device in a transparent mode.

In some embodiments, the request message may further include indication information, and the indication information is used to indicate a transmission time window for the central node to transmit the preamble. The central node may transmit a time window of the terminal device to the network device in the transmission time window.

Certainly, in some embodiments, the transmission time window may be predefined in a protocol, or may be configured by the network device to the terminal device and/or the central node, or may be negotiated by the terminal device and the central node, which is not specifically limited in the embodiments of the present disclosure.

Subsequent operations in the random access procedure may be performed by the terminal device or may be performed by the central node in place of the terminal device. In some embodiments, the request message may further be used to indicate whether a first operation in the random access procedure is performed by the central node in place of the terminal device. The first operation includes one or more of: receiving MSG2; transmitting MSG3; and receiving MSG4.

If the request message indicates that the central node performs the first operation in the random access procedure in place of the terminal device, the central node performs the first operation until it ends and does not perform operations after the first operation in the random access procedure, and the operations after the first operation are performed by the terminal device itself. For example, if the request message indicates that the central node receives the MSG2 in place of the terminal device, the central node does not transmit the MSG3 and receive the MSG4 in place of the terminal device.

The RAR in the embodiments of the present disclosure may be detected by the terminal device, or may be detected by the central node. If the RAR is detected by the central node, the central node transmits information received in the RAR to the terminal device. For example, the central node may notify the terminal device of information such as a received UL Grant, TA, and temporary C-RNTI. The terminal device may perform subsequent operations of random access using the information.

In some embodiments, the entire random access of the terminal device may be performed by the central node. In this case, the terminal device needs to notify the central node of purposes and related parameters of the random access. For example, the purposes of the random access may include RRC connection establishment, RRC connection reestablishment, cell handover, and the like. For security-related parameters such as NAS UE ID, the terminal device may use a temporary NAS UE ID, i.e., the terminal device transmits the temporary NAS UE ID to the central node, enabling the central node to assist the terminal device in completing random access using the temporary NAS UE ID. After the random access of the terminal device is completed, the terminal device may change the temporary NAS UE ID to a UE ID of the terminal device. After the random access contention succeeds, the terminal device may notify the terminal device that the random access is completed. In this way, the central node only needs to notify the terminal device of a random access result, so that the power consumption of the terminal device can be saved to the maximum extent.

If the RAR is detected by the terminal device, the terminal device may detect an RAR transmitted by the network device after transmitting the request message to the central node. In some embodiments, the terminal device may detect the RAR after the transmission time window. For example, the terminal device may detect, in a first time period, the RAR transmitted by the network device, where the first time period is after the transmission time window. The RAR is detected by the terminal device, so that the security of the data can be ensured.

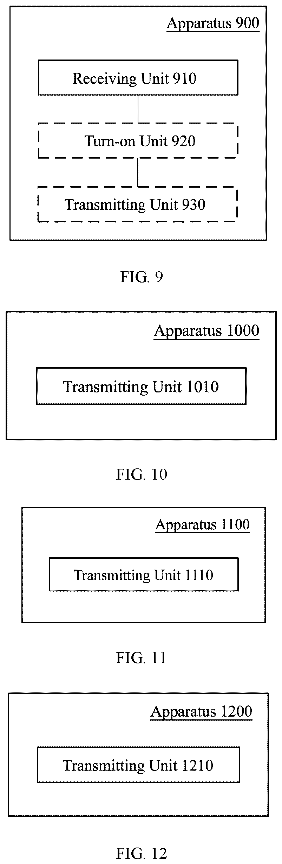

The method embodiments of the present disclosure are described in detail above with reference to FIG. 1 to FIG. 8, and the apparatus embodiments of the present disclosure are described in detail below with reference to FIG. 9 to FIG. 15. It should be understood that descriptions of the method embodiments correspond to descriptions of the apparatus embodiments, and therefore, reference may be made to the foregoing method embodiments for parts that are not described in detail.

FIG. 9 is a schematic structural diagram of an apparatus for wireless communication according to an embodiment of the present disclosure. The apparatus may be a terminal device. The terminal device shown in FIG. 9 may be any terminal device described above. The terminal device 900 includes a receiving unit 910.

Referring to FIG. 9, a receiving unit 910 is configured to receive first indication information transmitted by a central node. The first indication information is used to indicate that a network device pages the terminal device.

In some embodiments, the transmitting of the first indication information is triggered by one or both of: the central node receiving second indication information transmitted by an access network device, where the second indication information is used to indicate that the network device pages the terminal device; and the central node receiving third indication information transmitted by a core network, where the third indication information is used to indicate that the network device pages the terminal device.

In some embodiments, the second indication information is carried by a paging early indication (PEI) of the terminal device, and the PEI of the terminal device indicates that the terminal device receives paging indication information.

In some embodiments, the PEI of the terminal device is carried in first control information, and the first control information includes one or more of a PEI of the central node and PEIs of other terminal devices.

In some embodiments, PEIs of all terminal devices under a coverage of the central node are carried in same control information, and a sequence number $i_{PEI}$ of the PEI of the terminal device in bits of the PEI corresponding to the central node is determined according to the following equation:

$$i_{\mathrm{PEI}} = mod(n_{intraUEID}, N) + i_{begin}$$

where $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

In some embodiments, the second indication information is carried in a paging message of the central node.

In some embodiments, the second indication information includes an identifier of the terminal device.

In some embodiments, the second indication information is obtained via paging detection by the central node based on paging configuration information of the terminal device.

In some embodiments, the third indication information includes one or more of: an internet protocol (IP) address of the central node, an identifier of the central node, an IP address of the terminal device, and an identifier of the terminal device.

In some embodiments, the receiving unit 910 is further configured to receive a paging message via the central node: in response to the first indication information.

In some embodiments, the paging message is transmitted by the core network to the central node.

In some embodiments, the apparatus 900 further includes a turn-on unit 920, configured to turn on a communication module for communicating with an access network device in response to the first indication information, and the receiving unit 910 is configured to receive, via the communication module, a paging message transmitted by the access network device.

In some embodiments, the apparatus 900 further includes: a transmitting unit 930, configured to transmit fourth indication information to the network device. The fourth indication information is used to indicate that the terminal device is connected to the central node.

In some embodiments, the first indication information is received by a wakeup device in the terminal device.

In some embodiments, a paging cycle of the central node is less than or equal to a paging cycle of the terminal device.

In some embodiments, the central node is one or more of: a customer premise equipment (CPE), a wireless fidelity (WiFi) base station, a road side unit in a sidelink communication system, and a central node in the sidelink communication system.

FIG. 10 is a schematic structural diagram of an apparatus for wireless communication according to an embodiment of the present disclosure. The apparatus may be a central node. The central node shown in FIG. 10 may be any central node described above. The central node 1000 includes a transmitting unit 1010.

Referring to FIG. 10, a transmitting unit 1010 is configured to transmit first indication information to a terminal device. The first indication information is used to indicate that a network device pages the terminal device.

In some embodiments, the transmitting of the first indication information is triggered by one or both of: the central node receiving second indication information transmitted by an access network device, where the second indication information is used to indicate that the network device pages the terminal device; and the central node receiving third indication information transmitted by a core network, where the third indication information is used to indicate that the network device pages the terminal device.

In some embodiments, the second indication information is carried by a paging early indication (PEI) of the terminal device, and the PEI of the terminal device indicates that the terminal device receives paging indication information.

In some embodiments, the PEI of the terminal device is carried in the first control information, and the first control information further includes one or more of a PEI of the central node and PEIs of other terminal devices.

In some embodiments, PEIs of all terminal devices under a coverage of the central node are carried in same control information, and a sequence number $i_{PEI}$ of the PEI of the terminal device in bits of the PEI corresponding to the central node is determined according to the following equation:

$$i_{\mathrm{PEI}} = mod(n_{intraUEID}, N) + i_{begin}$$

where N is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

In some embodiments, the second indication information is carried in a paging message of the central node.

In some embodiments, the second indication information includes an identifier of the terminal device.

In some embodiments, the second indication information is obtained via paging detection by the central node based on paging configuration information of the terminal device.

In some embodiments, the third indication information includes one or more of: an internet protocol (IP) address of the central node, an identifier of the central node, an IP address of the terminal device, and an identifier of the terminal device.

In some embodiments, the transmitting unit 1010 is further configured to transmit a paging message to the terminal device.

In some embodiments, the paging message is transmitted by a core network to the central node.

In some embodiments, the first indication information is received by a wake-up device in the terminal device.

In some embodiments, a paging cycle of the central node is less than or equal to a paging cycle of the terminal device.

In some embodiments, the central node is one or more of: a customer premise equipment (CPE), a wireless fidelity (WiFi) base station, a road side unit in a sidelink communication system, and a central node in the sidelink communication system.

FIG. 11 is a schematic structural diagram of an apparatus for wireless communication according to an embodiment of the present disclosure. The apparatus may be an access network device. The access network device shown in FIG. 11 may be any access network device described above. The access network device 1100 includes a transmitting unit 1110.

The transmitting unit 1110 is configured to transmit second indication information to a central node to enable the central node to transmit first indication information to a terminal device. The first indication information is used to instruct that a network device pages the terminal device.

In some embodiments, the second indication information is carried by a paging early indication (PEI) of the terminal device, and the PEI of the terminal device indicates that the terminal device receives paging indication information.

In some embodiments, the PEI of the terminal device is carried in the first control information, and the first control information further includes one or more of a PEI of the central node and PEIs of other terminal devices.

In some embodiments, PEIs of all terminal devices under a coverage of the central node are carried in same control information, and a sequence number $i_{PEI}$ of the PEI of the terminal device in bits of the PEI corresponding to the central node is determined according to the following equation:

$$i_{\mathrm{PEI}} = mod(n_{intraUEID}, N) + i_{begin}$$

where N is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

In some embodiments, the second indication information is carried in a paging message of the central node.

In some embodiments, the second indication information includes an identifier of the terminal device.

In some embodiments, the second indication information is obtained via paging detection by the central node based on paging configuration information of the terminal device.

In some embodiments, the transmitting unit 1110 is further configured to transmit a paging message to the terminal device.

In some embodiments, the first indication information is received by a wakeup device in the terminal device.

In some embodiments, a paging cycle of the central node is less than or equal to a paging cycle of the terminal device.

In some embodiments, the central node includes one or more of: a customer premise equipment (CPE), a wireless fidelity (WiFi) base station, a road side unit in a sidelink communication system, and a central node in the sidelink communication system.

In some embodiments, the transmitting unit 1110 is configured to transmit the second indication information to the central node in a case of receiving fourth indication information transmitted by the terminal device. The fourth indication information is used to indicate that the terminal device is connected to the central node.

FIG. 12 is a schematic structural diagram of an apparatus for wireless communication according to an embodiment of the present disclosure. The apparatus may be a core network. The core network shown in FIG. 12 may be any core network described above. The core network 1200 includes a transmitting unit 1210.

Referring to FIG. 12, a transmitting unit 1210 is configured to transmit third indication information to a central node to enable the central node to transmit first indication information to a terminal device. The first indication information is used to indicate that the network device pages the terminal device.

In some embodiments, the transmitting unit 1210 is further configured to transmit a paging message to the central node to enable the central node to transmit the paging message to the terminal device.

In some embodiments, the first indication information is received by a wakeup device in the terminal device.

In some embodiments, a paging cycle of the central node is less than or equal to a paging cycle of the terminal device.

In some embodiments, the central node includes one or more of: a customer premise equipment (CPE), a wireless fidelity (WiFi) base station, a road side unit in a sidelink communication system, and a central node in the sidelink communication system.

In some embodiments, the transmitting unit 1210 is configured to transmit the third indication information to the central node in a case of receiving fourth indication information transmitted by the terminal device. The fourth indication information is used to indicate that the terminal device is connected to the central node.

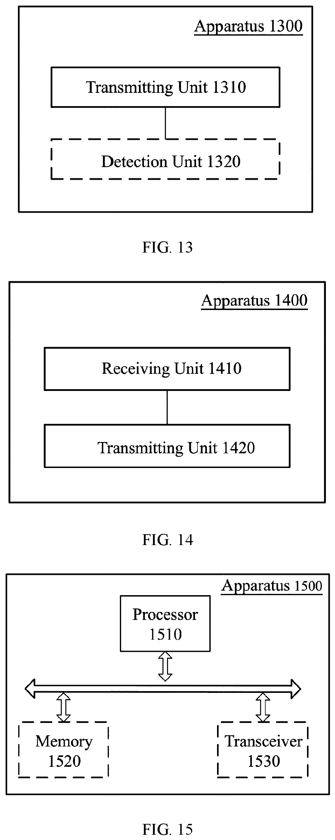

FIG. 13 is a schematic structural diagram of an apparatus for wireless communication according to an embodiment of the present disclosure. The apparatus may be a terminal device. The terminal device shown in FIG. 13 may be any terminal device described above. The terminal device 1300 includes a sending unit 1310.

Referring to FIG. 13, a transmitting unit 1310 is configured to transmit a request message to a central node. The request message is used to request the central node to transmit a preamble of the terminal device to a network device.

In some embodiments, the request message includes one or both of a format of the preamble and a sequence of the preamble.

In some embodiments, the request message is further used to indicate whether to a first operation in a random access procedure is performed by the central node. The first operation includes one or more of: receiving MSG2; transmitting MSG3; and receiving MSG4.

In some embodiments, the request message includes indication information, and the indication information is used to indicate a transmission time window for the central node to transmit the preamble.

In some embodiments, the apparatus 1300 further includes a detection unit 1320, configured to detect a random access response transmitted by the network device in a first time period. The first time period is after the transmission time window.

In some embodiments, the central node includes one or more of: a customer premise equipment (CPE), a wireless fidelity (WiFi) base station, a road side unit in a sidelink communication system, and a central node in the sidelink communication system.

FIG. 14 is a schematic structural diagram of an apparatus for wireless communication according to an embodiment of the present disclosure. The apparatus may be a central node. The central node shown in FIG. 14 may be any central node described above. The central node 1400 includes a receiving unit 1410 and a transmitting unit 1420.

Referring to FIG. 14, a receiving unit 1410 is configured to receive a request message transmitted by a terminal device. The request message is used to request the central node to transmit a preamble of the terminal device to a network device.

The transmitting unit 1420 is configured to transmit the preamble of the terminal device to the network device in response to the request message.

In some embodiments, the request message includes one or both of a format of the preamble and a sequence of the preamble.

In some embodiments, the request message is further used to indicate whether to a first operation in a random access procedure is performed by the central node. The first operation includes one or more of: receiving MSG2; transmitting MSG3; and receiving MSG4.

In some embodiments, the request message includes indication information, and the indication information is used to indicate a transmission time window for the central node to transmit the preamble. The transmitting unit 1420 is configured to transmit the preamble of the terminal device to the network device within the transmission time window.

In some embodiments, the central node includes one or more of: a customer premise equipment (CPE), a wireless fidelity (WiFi) base station, a road side unit in a sidelink communication system, and a central node in the sidelink communication system.

FIG. 15 is a schematic structural diagram of an apparatus according to an embodiment of the present disclosure. The dashed line in FIG. 15 indicates that the unit or module is optional. The apparatus 1500 may be configured to implement the method described in the foregoing method embodiments. The apparatus 1500 may be one or more of a chip, a terminal device, a central node, an access network device, and a core network.

The apparatus 1500 may include one or more processors 1510, and the processor 1510 may support the apparatus 1500 to implement the method described in the foregoing method embodiments. The processor 1510 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 1500 may further include one or more memories 1520 storing a program, and the program may be executed by the processor 1510 to cause the processor 1510 to perform the method described in the foregoing method embodiments. The memory 1520 may be independent of the processor 1510 or may be integrated into the processor 1510.

The apparatus 1500 may further include a transceiver 1530, and the processor 1510 may communicate with another device or chip via the transceiver 1530. For example, the processor 1510 may perform data transceiving with another device or chip via the transceiver 1530.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that, in the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

It should be understood that the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

It should be understood that, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for wireless communication, comprising:
   receiving, by a terminal device, first indication information transmitted by a central node, wherein the first indication information is used to indicate that a network device pages the terminal device.

2. The method according to claim 1, wherein the transmitting of the first indication information is triggered by one or both of:

   the central node receiving second indication information transmitted by an access network device, wherein the second indication information is used to indicate that the network device pages the terminal device; and
   the central node receiving third indication information transmitted by a core network, wherein the third indication information is used to indicate that the network device pages the terminal device.

3. The method according to claim 2, wherein the second indication information is carried by a paging early indication, PEI, of the terminal device, and the PEI of the terminal device indicates that the terminal device receives paging indication information.

4. The method according to claim 3, wherein the PEI of the terminal device is carried in first control information, and the first control information includes one or more of a PEI of the central node and PEIs of other terminal devices.

5. The method according to claim 4, wherein PEIs of all terminal devices under a coverage of the central node are carried in same control information, and a sequence number $i_{\mathrm{PEI}}$ of the PEI of the terminal device in bits of the PEI corresponding to the central node is determined according to the following equation:

$$i_{\mathrm{PEI}} = mod(n_{intraUEID}, N) + i_{begin}$$

wherein $N$ is a number of bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

6. The method according to claim 2, wherein the second indication information is carried in a paging message of the central node.

7. The method according to claim 6, wherein the second indication information includes an identifier of the terminal device.

8. The method according to claim 2, wherein the second indication information is obtained via paging detection by the central node based on paging configuration information of the terminal device.

9. The method according to claim 2, wherein the third indication information includes one or more of: an internet protocol, IP, address of the central node, an identifier of the central node, an IP address of the terminal device, and an identifier of the terminal device.

10. The method according to any one of claims 1 to 9, further comprising:
in response to the first indication information, receiving, by the terminal device, a paging message via the central node.

11. The method according to claim 10, wherein the paging message is transmitted by a core network to the central node.

12. The method according to any one of claims 1 to 9, further comprising:

in response to the first indication information, turning on, by the terminal device, a communication module for communicating with an access network device; and
receiving, by the terminal device via the communication module, a paging message transmitted by the access network device.

13. The method according to any one of claims 1 to 12, further comprising:
transmitting, by the terminal device, fourth indication information to the network device, wherein the fourth indication information is used to indicate that the terminal device is connected to the central node.

14. The method according to any one of claims 1 to 13, wherein the first indication information is received by a wakeup device in the terminal device.

15. The method according to any one of claims 1 to 14, wherein the central node includes one or more of a customer premise equipment, CPE, a wireless fidelity, WiFi, base station, a road side unit in a sidelink communication system, and a central node in the sidelink communication system.

16. A method for wireless communication, comprising:
transmitting, by a central node, first indication information to a terminal device, wherein the first indication information is used to indicate that a network device pages the terminal device.

17. The method according to claim 16, wherein the transmitting of the first indication information is triggered by one or both of:

the central node receiving second indication information transmitted by an access network device, wherein the second indication information is used to indicate that the network device pages the terminal device; and
the central node receiving third indication information transmitted by a core network, wherein the third indication information is used to indicate that the network device pages the terminal device.

18. The method according to claim 17, wherein the second indication information is carried by a paging early indication, PEI, of the terminal device, and the PEI of the terminal device indicates that the terminal device receives paging indication information.

19. The method according to claim 18, wherein the PEI of the terminal device is carried in first control information, and the first control information includes one or more of a PEI of the central node and PEIs of other terminal devices.

20. The method according to claim 19, wherein PEIs of all terminal devices under a coverage of the central node are carried in same control information, and a sequence number $i_{\mathrm{PEI}}$ of the PEI of the terminal device in bits of the PEI corresponding to the central node is determined according to the following equation:

$$i_{\mathrm{PEI}} = mod(n_{intraUEID}, N) + i_{begin}$$

wherein $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

21. The method according to claim 17, wherein the second indication information is carried in a paging message of the central node.

22. The method according to claim 21, wherein the second indication information includes an identifier of the terminal device.

23. The method according to claim 17, wherein the second indication information is obtained via paging detection by the central node based on paging configuration information of the terminal device.

24. The method according to claim 17, wherein the third indication information includes one or more of: an internet protocol, IP, address of the central node, an identifier of the central node, an IP address of the terminal device, and an identifier of the terminal device.

25. The method according to any one of claims 16 to 24, further comprising:
transmitting, by the central node, a paging message to the terminal device.

26. The method according to claim 25, wherein the paging message is transmitted by a core network to the central node.

27. The method according to any one of claims 16 to 26, wherein the first indication information is received by a wakeup device in the terminal device.

28. The method according to any one of claims 16 to 27, wherein the central node includes one or more of a customer premise equipment, CPE, a wireless fidelity, WiFi, base station, a road side unit in a sidelink communication system, and a central node in the sidelink communication system.

29. A method for wireless communication, comprising:
transmitting, by an access network device, second indication information to a central node to enable the central node to transmit first indication information to a terminal device, wherein the first indication information is used to indicate that a network device pages the terminal device.

30. The method according to claim 29, wherein the second indication information is carried by a paging early indication, PEI, of the terminal device, and the PEI of the terminal device indicates that the terminal device receives paging indication information.

31. The method according to claim 30, wherein the PEI of the terminal device is carried in first control information, and the first control information includes one or more of a PEI of the central node and PEIs of other terminal devices.

32. The method according to claim 31, wherein PEIs of all terminal devices under a coverage of the central node are carried in same control information, and a sequence number $i_{\text{PEI}}$ of the PEI of the terminal device in bits of the PEI corresponding to the central node is determined according to the following equation:

$$i_{\text{PEI}} = mod(n_{intraUEID}, N) + i_{begin}$$

wherein $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

33. The method according to claim 29, wherein the second indication information is carried in a paging message of the central node.

34. The method according to claim 33, wherein the second indication information includes an identifier of the terminal device.

35. The method according to claim 29, wherein the second indication information is obtained via paging detection by the central node based on paging configuration information of the terminal device.

36. The method according to any one of claims 29 to 35, further comprising:
transmitting, by the access network device, a paging message to the terminal device.

37. The method according to any one of claims 29 to 36, wherein the first indication information is received by a wakeup device in the terminal device.

38. The method according to any one of claims 29 to 37, wherein the central node includes one or more of a customer premise equipment, CPE, a wireless fidelity, WiFi, base station, a road side unit in a sidelink communication system, and a central node in the sidelink communication system.

39. The method according to any one of claims 29 to 38, wherein the access network device transmitting the second indication information to the central node includes:
the access network device transmitting the second indication information to the central node in a case of receiving fourth indication information transmitted by the terminal device, wherein the fourth indication information is used to indicate that the terminal device is connected to the central node.

40. A method for wireless communication, comprising:
transmitting, by a core network, third indication information to a central node to enable the central node to transmit first indication information to a terminal device, wherein the first indication information is used to indicate that a network device pages the terminal device.

41. The method according to claim 40, further comprising:
transmitting, by a core network, a paging message to the central node to enable the central node to transmit the paging message to the terminal device.

42. The method according to claim 40 or claim 41, wherein the first indication information is received by a wakeup device in the terminal device.

43. The method according to any one of claims 40 to 42, wherein a paging cycle of the central node is less than or equal to a paging cycle of the terminal device.

44. The method according to any one of claims 40 to 43, wherein the central node includes one or more of a customer premise equipment, CPE, a wireless fidelity, WiFi, base station, a road side unit in a sidelink communication system, and a central node in the sidelink communication system.

45. The method according to any one of claims 40 to 44, wherein the core network transmitting the third indication information to the central node includes:
the core network transmitting the third indication information to the central node in a case of receiving fourth indication information transmitted by the terminal device, wherein the fourth indication information is used to indicate that the terminal device is connected to the central node.

46. A method for wireless communication, comprising:
transmitting, by a terminal device, a request message to a central node, wherein the request message is used to request the central node to transmit a preamble of the terminal device to a network device.

47. The method according to claim 46, wherein the request message includes one or both of a format of the preamble and a sequence of the preamble.

48. The method according to claim 46 or claim 47, wherein the request message is further used to indicate whether a first operation in a random access procedure is performed by the central node in place of the terminal device, wherein the first operation includes one or more of:

receiving MSG2;
transmitting MSG3; and
receiving MSG4.

49. The method according to any one of claims 46 to 48, wherein the request message includes indication information used to indicate a transmission time window for the central node to transmit the preamble.

50. The method according to any one of claims 46 to 49, further comprising:
detecting, by the terminal device, a random access response transmitted by the network device in a first time period, wherein the first time period is after the transmission time window.

51. The method according to any one of claims 46 to 50, wherein the central node includes one or more of a customer premise equipment, CPE, a wireless fidelity, WiFi, base station, a road side unit in a sidelink communication system, and a central node in the sidelink communication system.

52. A method for wireless communication, comprising:

receiving, by a central node, a request message transmitted by a terminal device, wherein the request message is used to request the central node to transmit a preamble of the terminal device to a network device; and
transmitting, by the central node, the preamble of the terminal device to the network device in response to the request message.

53. The method according to claim 52, wherein the request message includes one or both of a format of the preamble and a sequence of the preamble.

54. The method according to claim 52 or claim 53, wherein the request message is further used to indicate whether a first operation in a random access procedure is performed by the central node, wherein the first operation includes one or more of:

receiving MSG2;
transmitting MSG3; and
receiving MSG4.

55. The method according to any one of claims 52 to 54, wherein the request message includes indication information used to indicate a transmission time window for the central node to transmit the preamble; and wherein the central node transmitting the preamble of the terminal device to the network device includes:
the central node transmitting the preamble of the terminal device to the network device within the transmission time window.

56. The method according to any one of claims 52 to 55, wherein the central node includes one or more of a customer premise equipment, CPE, a wireless fidelity, WiFi, base station, a road side unit in a sidelink communication system, and a central node in the sidelink communication system.

57. An apparatus for wireless communication, wherein the apparatus is a terminal device and comprises:
a receiving unit, configured to receive first indication information transmitted by a central node, wherein the first indication information is used to indicate that a network device pages the terminal device.

58. The apparatus according to claim 57, wherein the transmitting of the first indication information is triggered by one or both of:

the central node receiving second indication information transmitted by an access network device, wherein the second indication information is used to indicate that the network device pages the terminal device; and
the central node receiving third indication information transmitted by a core network, wherein the third indication information is used to indicate that the network device pages the terminal device.

59. The apparatus according to claim 58, wherein the second indication information is carried by a paging early indication, PEI, of the terminal device, and the PEI of the terminal device indicates that the terminal device receives paging indication information.

60. The apparatus according to claim 59, wherein the PEI of the terminal device is carried in first control information, and the first control information includes one or more of a PEI of the central node and PEIs of other terminal devices.

61. The apparatus according to claim 60, wherein PEIs of all terminal devices under a coverage of the central node are carried in same control information, and a sequence number $i_{PEI}$ of the PEI of the terminal device in bits of the PEI corresponding to the central node is determined according to the following equation:

$$i_{\mathrm{PEI}} = mod(n_{intraUEID}, N) + i_{begin}$$

wherein $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

62. The apparatus according to claim 58, wherein the second indication information is carried in a paging message of the central node.

63. The apparatus according to claim 62, wherein the second indication information includes an identifier of the terminal device.

64. The apparatus according to claim 58, wherein the second indication information is obtained via paging detection by the central node based on paging configuration information of the terminal device.

65. The apparatus according to claim 58, wherein the third indication information includes one or more of: an internet protocol, IP, address of the central node, an identifier of the central node, an IP address of the terminal device, and an identifier of the terminal device.

66. The apparatus according to any one of claims 57 to 65, wherein the receiving unit is further configured to: in response to the first indication information, receive a paging message via the central node.

67. The apparatus according to claim 66, wherein the paging message is transmitted by a core network to the central node.

68. The apparatus according to any one of claims 57 to 65, further comprising:

a turn-on unit, configured to turn on a communication module for communicating with an access network device in response to the first indication information;
wherein the receiving unit is configured to receive, via the communication module, a paging message transmitted by the access network device.

69. The apparatus according to any one of claims 57 to 68, further comprising:
a transmitting unit, configured to transmit fourth indication information to the network device, wherein the fourth indication information is used to indicate that the terminal device is connected to the central node.

70. The apparatus according to any one of claims 57 to 69, wherein the first indication information is received by a wakeup device in the terminal device.

71. The apparatus according to any one of claims 57 to 70, wherein the central node includes one or more of a customer premise equipment, CPE, a wireless fidelity, WiFi, base station, a road side unit in a sidelink communication system, and a central node in the sidelink communication system.

72. An apparatus for wireless communication, wherein the apparatus is a central node and comprises:
a transmitting unit, configured to transmit first indication information to a terminal device, wherein the first indication information is used to indicate that a network device pages the terminal device.

73. The apparatus according to claim 72, wherein the transmitting of the first indication information is triggered by one or both of:

the central node receiving second indication information transmitted by an access network device, wherein the second indication information is used to indicate that the network device pages the terminal device; and
the central node receiving third indication information transmitted by a core network, wherein the third indication information is used to indicate that the network device pages the terminal device.

74. The apparatus according to claim 73, wherein the second indication information is carried by a paging early indication, PEI, of the terminal device, and the PEI of the terminal device indicates that the terminal device receives paging indication information.

75. The apparatus according to claim 74, wherein the PEI of the terminal device is carried in first control information, and the first control information includes one or more of a PEI of the central node and PEIs of other terminal devices.

76. The apparatus according to claim 75, wherein PEIs of all terminal devices under a coverage of the central node are carried in same control information, and a sequence number $i_{\text{PEI}}$ of the PEI of the terminal device in bits of the PEI corresponding to the central node is determined according to the following equation:

$$i_{\text{PEI}} = mod(n_{intraUEID}, N) + i_{begin}$$

wherein $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

77. The apparatus according to claim 73, wherein the second indication information is carried in a paging message of the central node.

78. The apparatus according to claim 77, wherein the second indication information includes an identifier of the terminal device.

79. The apparatus according to claim 73, wherein the second indication information is obtained via paging detection by the central node based on paging configuration information of the terminal device.

80. The apparatus according to claim 73, wherein the third indication information includes one or more of: an internet protocol, IP, address of the central node, an identifier of the central node, an IP address of the terminal device, and an identifier of the terminal device.

81. The apparatus according to any one of claims 72 to 80, wherein the transmitting unit is further configured to:
transmit a paging message to the terminal device.

82. The apparatus according to claim 81, wherein the paging message is transmitted by a core network to the central node.

83. The apparatus according to any one of claims 72 to 82, wherein the first indication information is received by a wakeup device in the terminal device.

84. The apparatus according to any one of claims 72 to 83, wherein the central node includes one or more of a customer premise equipment, CPE, a wireless fidelity, WiFi, base station, a road side unit in a sidelink communication system, and a central node in the sidelink communication system.

85. An apparatus for wireless communication, wherein the apparatus is an access network device and comprises:
a transmitting unit, configured to transmit second indication information to a central node to enable the central node to transmit first indication information to a terminal device, wherein the first indication information is used to indicate that a network device pages the terminal device.

86. The apparatus according to claim 85, wherein the second indication information is carried by a paging early indication, PEI, of the terminal device, and the PEI of the terminal device indicates that the terminal device receives paging indication information.

87. The apparatus according to claim 86, wherein the PEI of the terminal device is carried in first control information, and the first control information includes one or more of a PEI of the central node and PEIs of other terminal devices.

88. The apparatus according to claim 87, wherein PEIs of all terminal devices under a coverage of the central node are carried in same control information, and a sequence number $i_{\text{PEI}}$ of the PEI of the terminal device in bits of the PEI corresponding to the central node is determined according to the following equation:

$$i_{\mathrm{PEI}} = mod(n_{intraUEID}, N) + i_{begin}$$

wherein $N$ is a number of the bits of the PEI corresponding to the central node, $i_{begin}$ is a bit sequence number of a PEI of a first terminal device in the bits of the PEI corresponding to the central node, and $n_{intraUEID}$ is a sequence number of the terminal device among all the terminal devices under the coverage of the central node.

89. The apparatus according to claim 85, wherein the second indication information is carried in a paging message of the central node.

90. The apparatus according to claim 89, wherein the second indication information includes an identifier of the terminal device.

91. The apparatus according to claim 85, wherein the second indication information is obtained via paging detection by the central node based on paging configuration information of the terminal device.

92. The apparatus according to any one of claims 85 to 91, wherein the transmitting unit is further configured to:
transmit a paging message to the terminal device.

93. The apparatus according to any one of claims 85 to 92, wherein the first indication information is received by a wakeup device in the terminal device.

94. The apparatus according to any one of claims 85 to 93, wherein the central node includes one or more of a customer premise equipment, CPE, a wireless fidelity, WiFi, base station, a road side unit in a sidelink communication system, and a central node in the sidelink communication system.

95. The apparatus according to any one of claims 85 to 94, wherein the transmitting unit is further configured to:
transmit the second indication information to the central node in a case of receiving fourth indication information transmitted by the terminal device, wherein the fourth indication information is used to indicate that the terminal device is connected to the central node.

96. An apparatus for wireless communication, wherein the apparatus is a core network and comprises:
a transmitting unit, configured to transmit third indication information to a central node to enable the central node to transmit first indication information to a terminal device, wherein the first indication information is used to indicate that a network device pages the terminal device.

97. The apparatus according to claim 96, wherein the transmitting unit is further configured to:
transmit a paging message to the central node to enable the central node to transmit the paging message to the terminal device.

98. The apparatus according to claim 96 or claim 97, wherein the first indication information is received by a wakeup device in the terminal device.

99. The apparatus according to any one of claims 96 to 98, wherein a paging cycle of the central node is less than or equal to a paging cycle of the terminal device.

100.
The apparatus according to any one of claims 96 to 99, wherein the central node includes one or more of a customer premise equipment, CPE, a wireless fidelity, WiFi, base station, a road side unit in a sidelink communication system, and a central node in the sidelink communication system.

101.
The apparatus according to any one of claims 96 to 100, wherein the transmitting unit is configured to:
transmit the third indication information to the central node in a case of receiving fourth indication information transmitted by the terminal device, wherein the fourth indication information is used to indicate that the terminal device is connected to the central node.

102.
An apparatus for wireless communication, wherein the apparatus is a terminal device and comprises:
a transmitting unit, configured to transmit a request message to a central node, wherein the request message is used to request the central node to transmit a preamble of the terminal device to a network device.

103.
The apparatus according to claim 102, wherein the request message includes one or both of a format of the preamble and a sequence of the preamble.

104.
The apparatus according to claim 102 or claim 103, wherein the request message is further used to indicate whether a first operation in a random access procedure is performed by the central node, wherein the first operation includes one or more of:

    receiving MSG2;
    transmitting MSG3; and
    receiving MSG4.

105.
The apparatus according to any one of claims 102 to 104, wherein the request message includes indication information, and the indication information is used to indicate a transmission time window for the central node to transmit the preamble.

**106.**
The apparatus according to any one of claims 102 to 105, further comprising:
a detection unit, configured to detect a random access response transmitted by the network device in a first time period, wherein the first time period is after the transmission time window.

**107.**
The apparatus according to any one of claims 102 to 106, wherein the central node includes one or more of a customer premise equipment, CPE, a wireless fidelity, WiFi, base station, a road side unit in a sidelink communication system, and a central node in the sidelink communication system.

**108.**
An apparatus for wireless communication, wherein the apparatus is a central node and comprises:

> a receiving unit, configured to receive a request message transmitted by a terminal device, wherein the request message is used to request the central node to transmit a preamble of the terminal device to a network device; and
> a transmitting unit, configured to transmit the preamble of the terminal device to the network device in response to the request message.

**109.**
The apparatus according to claim 108, wherein the request message includes one or both of a format of the preamble and a sequence of the preamble.

**110.**
The apparatus according to claim 108 or claim 109, wherein the request message is further used to indicate whether a first operation in a random access procedure is performed by the central node, wherein the first operation includes one or more of:

> receiving MSG2;
> transmitting MSG3; and
> receiving MSG4.

**111.** The apparatus according to any one of claims 108 to 110, wherein the request message includes indication information, and the indication information is used to indicate a transmission time window for the central node to transmit the preamble; and wherein the transmitting unit is configured to: transmit the preamble of the terminal device to the network device within the transmission time window.

**112.**
The apparatus according to any one of claims 108 to 111, wherein the central node includes one or more of a customer premise equipment, CPE, a wireless fidelity, WiFi, base station, a road side unit in a sidelink communication system, and a central node in the sidelink communication system.

**113.**
An apparatus for wireless communication, comprising a memory and a processor, wherein the memory is configured to store a program, and the processor is configured to invoke the program in the memory to cause the terminal device to perform the method according to any one of claims 1 to 56.

**114.**
An apparatus comprising a processor, wherein the processor is configured to invoke a program from a memory to cause the apparatus to perform the method according to any one of claims 1 to 56.

100

110

120

120

FIG. 1

120

130

110

FIG. 2

110

120C

120A

120B

130

120D

FIG. 3

FIG. 4

FIG. 5

Terminal Device       Network Device

S310, MSG1

S320, MSG2

S330, MSG3

S340, MSG4

FIG. 6

Terminal Device       Network Device

S710, MSGA

S720, MSGB

FIG. 7

Terminal Device       Central Node       Network Device

S810, request message

S820, preamble

FIG. 8

Apparatus 900

Receiving Unit 910

Turn-on Unit 920

Transmitting Unit 930

FIG. 9

Apparatus 1000

Transmitting Unit 1010

FIG. 10

Apparatus 1100

Transmitting Unit 1110

FIG. 11

Apparatus 1200

Transmitting Unit 1210

FIG. 12

Apparatus 1300

Transmitting Unit 1310

Detection Unit 1320

FIG. 13

Apparatus 1400

Receiving Unit 1410

Transmitting Unit 1420

FIG. 14

Apparatus 1500

Processor 1510

Memory 1520

Transceiver 1530

FIG. 15

| INTERNATIONAL SEARCH REPORT | International application No. |
| --- | --- |
| | **PCT/CN2022/101989** |

**A.    CLASSIFICATION OF SUBJECT MATTER**

H04W 68/02(2009.01)i

According to International Patent Classification (IPC) or to both national classification and IPC

**B.      FIELDS SEARCHED**

Minimum documentation searched (classification system followed by classification symbols)

H04W; H04Q; H04B; H04L

Documentation searched other than minimum documentation to the extent that such documents are included in the fields searched

Electronic data base consulted during the international search (name of data base and, where practicable, search terms used)

CNKI, CNPAT, WPI, EPODOC: 前导, 中继, 寻呼, 中心节点, 路由, CPE, 前置设备, preamble, relay, paging, central node, rout+.

**C.      DOCUMENTS CONSIDERED TO BE RELEVANT**

| Category* | Citation of document, with indication, where appropriate, of the relevant passages | Relevant to claim No. |
| --- | --- | --- |
| X | CN 109729566 A (HUAWEI TECHNOLOGIES CO., LTD.) 07 May 2019 (2019-05-07) claims 1-25, description, paragraphs 193-245, and figure 16 | 1-45, 57-101, 113-114 |
| X | WO 2022127777 A1 (HUAWEI TECHNOLOGIES CO., LTD.) 23 June 2022 (2022-06-23) claims 1-28 | 46-56, 102-114 |
| A | CN 113170416 A (HUAWEI TECHNOLOGIES CO., LTD.) 23 July 2021 (2021-07-23) entire document | 1-114 |
| A | CN 114449516 A (HUAWEI TECHNOLOGIES CO., LTD.) 06 May 2022 (2022-05-06) entire document | 1-114 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2022** | **16 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/101989**

| Patent document cited in search report | | | Publication date (day/month/year) | Patent family member(s) | | | Publication date (day/month/year) |
|---|---|---|---|---|---|---|---|
| CN | 109729566 | A | 07 May 2019 | US | 2020252853 | A1 | 06 August 2020 |
| | | | | EP | 3687222 | A4 | 29 July 2020 |
| | | | | WO | 2019080800 | A1 | 02 May 2019 |
| WO | 2022127777 | A1 | 23 June 2022 | CN | 114641090 | A | 17 June 2022 |
| CN | 113170416 | A | 23 July 2021 | WO | 2020191781 | A1 | 01 October 2020 |
| | | | | US | 2022015152 | A1 | 13 January 2022 |
| | | | | EP | 3944685 | A1 | 26 January 2022 |
| CN | 114449516 | A | 06 May 2022 | WO | 2022095703 | A1 | 12 May 2022 |

Form PCT/ISA/210 (patent family annex) (January 2015)